# EUROPEAN PATENT APPLICATION

(11) **EP 4 675 041 A1**
(43) Date of publication of application: **07.01.2026**
(21) Application number: 25187422.8
(22) Date of filing: 03.07.2025
(51) Int. Cl.: D21H 21/36, A01G 24/18, A01G 24/20

(54) **METHODS FOR ISOLATION, DISINFECTION AND ENRICHMENT AND GROWTH MEDIA OF CELLULOSE FRACTIONS**

(30) Priority: 04.07.2024 DK PA202430387
(71) Applicant: E+H KEMI ApS, 2830 Virum (DK)
(72) Inventor: Madsen, Ejner Læsøe, 8530 Hjortshøj (DK)

(57) **Abstract**

A growth medium for replacement of Sphagnum suitable for acid soil plants, as litter for chickens and as ground cover. A method to prepare such a growth comprises after harvest of a cellulosic plant material, a separation of the cellulose from pith material of the plant, a disinfection and an enrichment of the separated cellulosic material. Suitable plant material contains fiber with a high cellulose-content larger than 50weight%, where content of crystalline cellulose must be above 54%.

## Description

The present invention relates to a compound and a process for preparation of an alternative to Sphagnum.

More specifically it relates to a growth medium for replacement of Sphagnum, Tørvemos, which is sold under the name Spagnum for plants, as litter for chickens, and as ground cover.

### Background

Wikipedia: Sphagnum - on packings often spelled sphagnum - is a soil conditioner and a cultivation substrate - which in its pure form- consists of fossil parts of plants from the genus Tørvemos (Sphagnum). Thus, Spagnum is the spelling chosen by some to distinguish the product sphagnum from the plant genus Tørvemos, Sphagnum (with -h-). Plant remnants are collected from meter thick layers of raised bog where they have avoided to be decomposed. This is due to the hunid conditions of the soil which has made it deficient in oxygen, and the decomposition has taken place very slowly. At the decaying there is first formed humin acids which have depleted bases first and foremost chalk in the soil such that both the Sphagnum layer and the raw soil underneath have turned acidic.

Sphagnum is harvested from the raised bog, where it has lied for thousands of years. The top layer is a CO₂-uptaking layer of living plants, and underneath is the layer which is not totally decayed into oil and coal. It is carbonhydride compounds which by the presence of molecular oxygen will be converted into water and CO₂, where CO₂ contributes to the greenhouse effect of the globe. The decomposition of carbonhydride compounds starts as soon as Sphagnum gets in contact with molecular oxygen, that is right after harvest.

Sphagnum, Tørvemos, is fossil plant material remains and occurs naturally in raised bog. The top layer of partly decomposed Sphagnum is used as growth medium for plants and for acid soil plants due to their low pH and for other green plants, and as litter to chickens and as cover material, as Sphagnum has three important, good properties.
- Relatively large buffer capacity from the large content of plant polyphenols, which yields a good control of microorganisms for a limited period.
- Can keep humidity - good water control in that the growth medium must not be too wet nor dry
- Not too tight, having a low specific gravity which allows for air around the roots on plants and the foots of chickens.

Harvest of Sphagnum has a negative CO₂ footprint, as it corresponds to removal of rain forest which could have taken up CO₂ from the air. The layers under the top layer of a raised bog are layers of dead Tørvemos beneath the top layer of living Tørvemos having a rich biodiversity. When Tørvemos is harvested for commercial Spagnum one of the most CO₂ reducing resources is spent, because otherwise there could have been a layer of living layer of Tørvemos. In addition to this a natural conversion of the layers beneath the top layer due to the presence of molecular oxygen will start after harvest. This results in an unnecessary CO₂ emission.

Thus, it will be desirable if there could be developed a growth medium, which can replace Sphagnum from raised bog which neither gives a loss of biodiversity nor a negative CO₂ footprint.

### Summary of the invention

The following description applies the following definitions re fiber lengths of cellulosic materials, where the cellulose consists of in average of 10.000 molecules β-D-glucose connected by β-1,4-glycosidbounds:
a. Chains of β-D-glucose covalent bounded in lengths of 20 cm - 200 cm
b. Fibrils, possibly mated, of β-D-glucose covalently connected in lengths of 1 cm - 20 cm
c. Pulp fiber β-D-glucose covalently connected in lengths of < 1cm Long cellulose fibers are defined as belonging to a. Chains or b. Fibrils.
Short cellulose fibers are characterized as pulp fibers.

The amount of cellulose, which has crystallized - that is understood as the fraction of the cellulose which can be said to be more crystalline than amorph - is in this description stated with a measure named crystallinity index (CI). The measurement method of measuring the fraction of the cellulose consists of taking XRD X-ray diffraction spectra and calculate the ratio between two peaks, as e.g. described in Park et al. Biotechnology for Biofuels 2010, 3:10. Important properties of cellulose fiber.

Plant fiber is constructed from cellulose, lignin and hemicellulose.

Cellulose is a homogeneous polycrystalline macromolecular compound consisting of two types of regions; one or more structured crystalline regions of high homogeneity; one or more amorph regions of unstructured construction. The amount of the crystalline cellulose relative to the total amount of cellulose is named the crystallinity index of the fibers. For example, the plant fiber Hibiscus Sabdariffa has a crystallinity index of 77% (77% of the cellulose in the fiber is crystalline and 23% of the cellulose in the fiber is amorph).

The crystallinity index is most often determined by X-ray diffraction, XRD.

The chemical and physical properties of the cellulose fibers is related to the total content of cellulose (70weight% in Hibiscus Sabdariffa) and crystallinity index of the cellulose fibers. The cellulose content, and the percentage of crystalline cellulose herein as well, give a longer resistance to microbial enzyme decomposition, than the compound content and percentage of crystalline compound give when the compound is lignin or hemicellulose. The total fraction of cellulose in a fiber and the crystallinity index of this cellulose gives the fibers different properties.

A high cellulose content with a high crystallinity index is found in the fibers of Hibiscus Sabdariffa, 70 weight% cellulose with a crystallinity index of 77%. Hibiscus Sabdariffa cellulose fiber inhibits the microbial activity much better against decomposition of its cellulose-content than fibers of reed, which have a cellulose fiber content of 40 weight% cellulose with a crystallinity index of 64%.
Source: (Data om celluloseindhold and bestemmelse af krystallinsk cellulose)
The bright side of cellulosic hibiscus sabdariffa fibers: towards sustainable materials from the macro- to nanoscale,
Ashvinder K. Rana and Vijay Kumar Thakur, Department of Chemistry, Sri Sai University, Palampur, 176061, India.
First published on 28th June 2021

The total cellulose content may be at least 30 weight%, preferably 50 weight%. Most trees have a cellulose content below 50 weight%. Plant fibers with a cellulose content below 50 weight%, which are interesting as a resource, is e.g. rice straw.

It is most optimal to use plants with a crystallinity index over 54% of plant cellulose content for example the grass Black spear grass (*Hetropogan contortus)* having a cellulose content of 66 weight % and a crystallinity index of 55 %. Black spear grass may produce large amounts fiber/m² cultivation area like for example Hibiscus Sabdariffa. A trial series with different plants with a crystallinity index below 50% or over 60% indicated that over 60 % there is obtained an acceptable level of the amount of added antimicrobial activity, which could control the plant fiber inhibition of microbial decomposition in up to 1 months. It is important that there in the future may be used other resources for production of a growth medium than Spagnum, in agreement with climate (FN climate goals) and economy.

After a long and depth going research there has been provided a solution in the form of a set of methods for preparing a growth media. The set comprises methods for disinfection and enrichment of cellulose fiber fractions, fractionation of cellulose material and isolation of cellulose fiber fractions, and down chopping of cellulose fiber fractions to cellulose fiber granules, and combined down chopping for preparation of growth media:
A method for disinfection and enrichment of a cellulose fiber fraction from a cellulose-containing material having a cellulose content of minimum 30 weight% and a crystallinity index of at least 30%, preferably 30% to 54%, enrichment method 2, is where a solution comprises in ethyl ethanoate - or a ethanoatderivate with the properties of ethyl ethanoate: benzaldehydee or benzyl alcohol, salicylic acid and Chicle gum, which is added a cellulose-containing material, possibly supplemented followingly with an improvement of the pH-buffer capacity with an ethanoic acid anhydride and ethanoic acid.

The C-atoms in ethyl ethanoate may be substituted with groups not having influence on the properties as solvent in the form of a reaction with some of the reactants, which enter the method. Examples are isopropylethanoat and isobutylethanoat. Propylethanoat will at hydrolysis give an unpleasant smell, which in several circumstances is not desirable,
An embodiment of this method is where the cellulose-containing material is plant fiber material comprising long cellulose fibers for example from reed or from Hibiscus Sabdariffa.

A method comprises also to prepare the cellulose-containing material for disinfection and enrichment according to one of the above methods by performing a down chopping before, e.g. reed stems, which are down chopped e.g. in a hammermill with a riddle having an opening 3 to 10 mm. There is isolated a cellulose-containing down chopped fiber fraction. Then, the cellulose-containing cellulose fiber fraction is prepared according to one of the above methods.

Some cellulosic cellulose fiber material contains a natural content of antimicrobial activity for which a simpler method, enrichment method 1, has been provided. Such a method for disinfection and enrichment is applied to isolated fiber fractions of cellulosic plant material having a cellulose-content greater than 30 weight%, preferably 50 weight%, and a crystallinity index greater than 54% e.g. Hibiscus Sabdariffa. There is added a solution of benzaldehyde or benzyl alcohol, and salicylic acid, and pH is adjusted to between 2 and 6,5, preferably 3,5 and 6,5, like it is done for soil conditioner for plants. The reaction time is 1 to 5 hours. There is obtained a fiber fraction by this treatment, which has stronger resistance to reaction by microorganisms and hereby longer durability as e.g. growth medium.

An embodiment of this method is where the cellulosic material is plant material containing longer fibers i.e. among plants with long fibers those with the longer fibers from for example Hibiscus Sabdariffa and one or more of the down chopped straws HS, or cellulosic fiber fractions HS 1, HS 2 from same plant.

Enrichment method 2 is especially developed for enrichment of cellulosic material having minimum 30 weight% cellulose and a crystallinity index 30 to 54%. It can also be applied to cellulose with crystallinity index above 54%. Although it is not necessary as enrichment method 1 in many cases can be applied.

Enrichment method 1 is not applied to reed which does not have sufficient antimicrobial activity from polyphenols despite its high crystallinity index; it may be applied on cellulosic material having minimum 30weight% cellulose, preferably minimum 50weight% cellulose, and crystallinity index of minimum 54%, and having sufficient antimicrobial activity.

A method which comprises an isolation of a cellulose fiber fraction from straws from e.g. Hibiscus Sabdariffa or other cellulosic plant material, which followingly may be treated according to the methods for disinfection and enrichment cited above, has also been developed. It concerns how
the separation which must be performed for straws may take place 1) in a decorticator, which tears off the outermost layer of cellulose fiber, or 2) first submerged in a pond with water and thereupon separated in a decorticator. Hereafter the cellulose fiber fraction is treated with the method for disinfection and enrichment, enrichment method 1, above.

A method for preparation of a growth medium is where a cellulose fiber fraction of a cellulosic material is mixed with one or more other cellulose fiber fractions of one or more other cellulosic materials, whereafter the mixture is down chopped and enriched by the enrichment method 2 for disinfection and enrichment of cellulose fiber fractions above. It is a method where at least one more other cellulosic materials, plant materials, for example Hibiscus Sabdariffa, have a cellulose-content of minimum 50 weight%, with a crystallinity index larger than 54%. A further cellulose fraction may be disinfected cellulosic plant material with a cellulose-content of minimum 30 weight% and at crystallinity index over 54%, for example reed.

Growth media for cuttings and plants require its own special drying process for a cellulose fiber fraction prepared according to enrichment method 1. Cuttings are sterile meristem-reproduced plants and are vulnerable to ion strengths above 3,5 mS and physical contact.

Optimal ion strengths are:
- cuttings 2,5 to 3,5 mS
- 4 to 9 weeks old plants 3,0 to 4,0 mS
- 10 weeks or elder plants 4,0 to 5,0 mS
pH of the growth medium increases with the age of the plants to 4,5 to 6.

The growth medium for these is prepared by acid hydrolysis with sulphuric acid or another acid which do not by hydrolysis form chloride ions or nitrate ions or other to the cellulose fiber fraction undesired ions and followed by evaporation of water for example by means of the sun.

The cellulose resource is down chopped to primary 5 mm. (3mm-7mm). The cellulose resource contains for example from Hibiscus S. both the long outer fiber and the inner short fibers. The short fibers will by a down chopping 5-7 mm give the final product of a light physical structure which may be compared with the added perlite of the known Peat Moss / Sphagnum. The balls will be decomposed by the chemical processes with sulphuric acid (hydrolysis and water removal).

A concentrated acid for example sulphuric acid is added to pH 1,5 to 3, optimally 2, to a cellulose fiber fraction.

The cellulose fiber fraction is evaporated for water for example by means of the sun.

By evaporation of water the remaining acid has a higher pH. At pH below 2 the cellulose fiber fraction is moistened. Hereby the up-concentrated remaining stronger acid will be hydrolyzed and form water while carbonizing fiber material. This results in that the pH increases.

Hereafter pH is fine adjusted with for example a solution off KOH (kalium hydroxide). pH must be adjusted to minimum 3,5 and in most cases to maximum 6,5.

By this method the ion strength is minimized in the growth medium, such that the cuttings get optimal conditions.

There may be added a catalysator for example iron oxide for catalyzing the reactions with up-concentrated sulphuric acid.

Fine-adjustment of pH with kalium hydroxide is important, as for example adjustment with calcium hydroxide forms not-wanted salts.

An embodiment of this is where the growth medium is for litter for chickens. It is applied where it is necessary prior to a disinfection and enrichment. This concerns cellulosic plant material from for example Hibiscus Sabdariffa, where there has been applied a rotor down chopper, which down chops to 10 to 30 mm fiber which is not sufficient. A cellulose fiber fraction of the cellulosic plant material is down chopped and thereupon formed to small balls according to claim 9.

A method for down chopping of cardboard is anticipated. Cardboard is down chopped if appropriate together with cellulose fiber fractions from plant materials at least one with a crystallinity index greater than 54%.

The methods above used together may be used for preparation of a series of different growth media.

A growth medium according to the invention, thus, has a specific gravity of maximum 250 kg/m³, preferably 75-150 kg/m³, and comprises at least one or more isolated cellulose fiber fractions, disinfected and enriched, of a down chopped cellulosic material, where the cellulosic material has at least one comprising a cellulose-content of minimum 50weight% with a crystallinity index of over 54%.

An embodiment of a growth medium according to the invention is, where the cellulose fiber material has a cellulose-content of minimum 50weight%, with a crystallinity index of over 54%, from for example Hibiscus Sabdarifa and if appropriate another cellulose fiber material with a crystalline cellulose-content with a crystallinity index of less than 54%. A crystallinity index over 54% may also be used, for example reed.

Another embodiment of the growth medium comprises further cardboard.

Growth media according to the invention are characterized by their low specific gravity and prepared from a disinfected and enriched cellulose fiber fraction followingly down chopped and has a low specific gravity below 250 kg/m³ and a crystalline cellulose-content with a crystallinity index greater than 54% of at least one of the entering cellulose fiber fractions. Growth media for different uses with their specific content of cellulose fiber fractions provided according to the invention are anticipated.

Growth media as a soil conditioner for plants are disclosed with a qualified content of down chopped cellulose fiber fractions HS1 and HS2 from Hibiscus Sabdariffa and reed.

Growth media for uses as litter for chickens are disclosed with a qualified content of cellulose fiber fractions from Hibiscus Sabdariffa, down chopped straws HS, and disinfected and enriched cellulose fiber fractions, HS1 and HS2, both followingly down chopped.

Growth media for use as ground cover are disclosed with a qualified content of down chopped cellulose fiber fractions of one or more from Hibiscus Sabdariffa, reed and down chopped cardboard.

### Detailed description

According to the present invention long fibers are defined as fibers of 1 cm or more, typically up to 200 cm long, whereas short fibers are less than 1 cm long. The cellulose fibers from some plants comprise at the same time smaller amounts of acids and phenols, which may be compared with the phenols and acids, which are present in Sphagnum, Tørvemos. For this reason, the plant Hibiscus Sabdariffa (Rosella, Karkadeh, Krachiap Daeng) is a very qualified raw resource for the growth medium according to the invention.

To better understand the invention there will now be described some nonlimiting examples, where:
Fig. 1 shows et flow diagram for treatment of for example Hibiscus Sabdariffa straws from harvest to isolation of the cellulose fiber fraction in different ways.
Fig. 2 shows the principle of a decorticator.
Fig. 3 shows a principle for disinfection and enrichment or further enrichment of cellulose fiber fractions.
Fig. 4 shows a hammermill and its principle for down chopping of cellulose fiber material.
Fig. 5 shows at the top two methods for enrichment of cellulose fiber granules. At the bottom there is shown the principle for pH stabilization using the same equipment as for enrichment.
Fig. 6 shows the structure of cellulose.
Fig. 7 shows the cellulose fibers, where regions of amorph and crystalline cellulose are shown.

Chronologically the growth media are prepared according to the invention as in the figure order.

The starting point is a cellulosic material preferably a plant material, and most preferably a plant material, which resemble Spaghnum the most. Sphagnum has a specific gravity in the interval 75-150 kg/m³ depending on age, a pH of 3-5 and microorganism-controlling properties (phenol acids), which renders it a sought-after product by garden owners etc.

Fiber fraction after fractionation of down chopped straws of Hibiscus Sabdariffa has a specific gravity in the interval 50-150 kg/m³. Hibiscus Sabdariffa straw has a high content of cellulose and contains longer fibers of cellulose, which gives the fraction its lightness.

When the cellulose is exposed for a treatment with acid hydrolysis, some of the cellulose, primary some of the amorph cellulose is converted into microcrystal, MCC, which is recognized on the darker color of reed and Hibiscus Sabdariffa. Larger surface gives increased chance of embedding a disinfection process with salicylic acid and attachment by means of Chiclegum.

Salicylic acid is embedded in the cellulose at pH less than or equal to 3,5 and is deliberated over time from here.

The stearic acid is added so that the hydrophobic compounds Chiclegum, benzaldehyde/benzyl alcohol, salicylic acid, and the solvent ethyl ethanoate can be better kept by the cellulose and the microcrystal cellulose, MCC.

The purpose with the embedding of salicylic acid is to convey to a growth medium the added good properties, pH is stabilized over long time up to months during which salicylic acid is slowly deliberated. Salicylic acid works disinfectant.

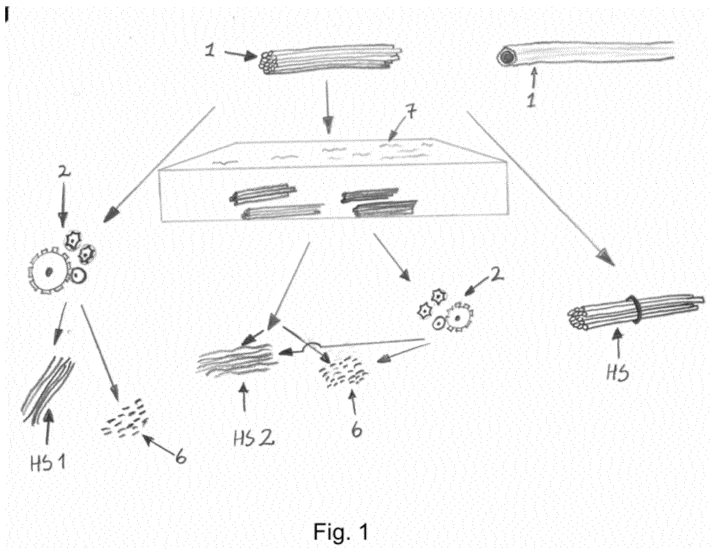

Fig. 1 shows the different processing methods that straws from Hibiscus Sabdariffa may undergo. A production starts with that the plants are harvested, then leaves and flowers are cut off, whereas the straws as residual product is separated. A cross section through a Hibiscus Sabdariffa straw (1) shows a pith material in the middle and fibers around.

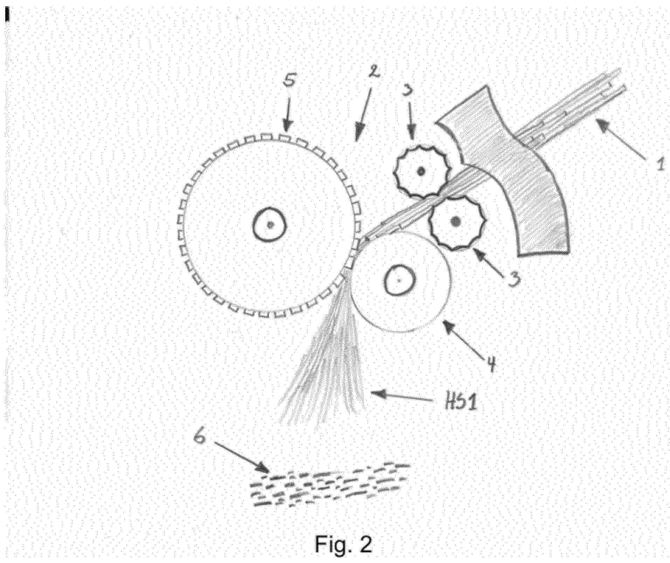

The straws from Hibiscus Sabdariffa are treated in a decorticator (2), which quickly pull off the fiber part from both the fresh and dried straws. A decorticator's principle is shown in Fig. 2. Hibiscus Sabdariffa straw passes between two rollers with ribbed surface (3). Hereby the surface is pulled off, which comprises the long fibers from the central pith material. The long fibers, HS1, are spread between a driving wheel (4) and a ribbed large broad wheel (5). The pith material (6) drops down and form a layer of a to large extent short fibers beneath. Thus, there is obtained two fractions, one with long cellulose fiber, HS1, which comprises some residual straw material and one with the pith material of the straw in pieces, which comprises both long and short cellulose fiber.

Another possibility is to lay the straws in a pond (7), an artificial lake of typical 25mx80m and 5 m deep, where a softening of the fiber part of Hibiscus Sabdariffa. The softening takes place for 2 - 4 weeks. Thereupon the straws are separated in a decorticator or manually in a pure cellulose fiber fraction, HS2, and pith material (6).

It is also possible to apply whole straws of Hibiscus Sabdariffa, HS. HS, whole straws are applied as ground cover material if nescessary together with reed, cardboard and sand.

A disinfection and the same time enrichment to obtain a growth medium suitable for plants are necessary for cellulosic fiber fractions, which are prepared from the cellulosic material not to be fast decomposed by microorganisms.

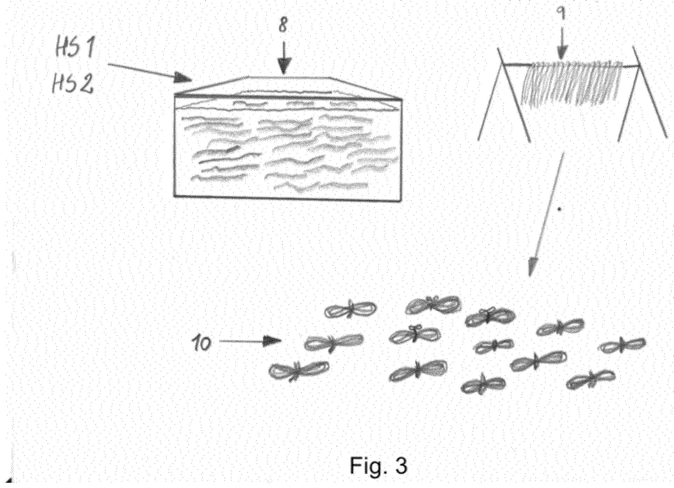

Fig. 3 shows that HS1 and HS2 followingly are treated together or separately in a bath (8), enrichment method 2. The solution is left for 1 to 5 hours. It is an aqueous solution with
- benzaldehyde added for example from a concentrated solution 0,9-1,0M, or
- benzyl alcohol added from a concentrated solution for example 0,9-1,0M to a final concentration of 0,00025M-0,001M,
- salicylic acid 0,1 to 0,5 g/l, which is a solid compound which is teared off, preferably 0,25g/l, and
- an inorganic acid such as sulphuric acid for example 10 or 18M added to pH becomes between 1 and 4, dependent on the product purpose.

Benzaldehyde is oxidized slowly into benzoic acid, which together with the content of phenols, organic acids and anthocyanins from the straws contributes to keep the fibers sterile.

pH is adjusted with an inorganic acid to a pH value between 1 and 4, which advances the hydrolysis of the amorph cellulose, which hereby is converted to microcrystalline cellulose, MCC. MCC has a large surface and will embed salicylic acid. The acidic pH and stearic acid advance the embedding of salicylic acid in the microcrystalline cellulose. Salicylic acid is deliberated hereby slowly over time to the environment.

The organic acids in the Hibiscus Sabdariffa fibers, Hibiscus acid, Citric acid, phenolic acid and the embedded salicylic acid contribute together with the added inorganic acid to the acidic environment in a final product. Acidic environment inhibits microbial conversion of the cellulose.

After the treatment the Hibiscus fibers (9) are bundled (10) to later be down chopped or is down chopped immediately after drying if convenient in a rotor-down chopper to a desired size.

Prior to disinfection and enrichment, the cellulose fiber fractions from cellulosic material are down chopped for disinfection and enrichment to be effective. Cellulose fiber fractions and cellulosic materials which comprises a crystalline cellulose with a crystallinity index above 54% are in the figure description below at the same time disinfected and enriched. Cellulose fiber fractions and cellulosic materials which have a crystalline cellulose-content with a crystallinity index of 30 to 54% may also be further treated at the same time in all the process steps starting at the down chopping process.

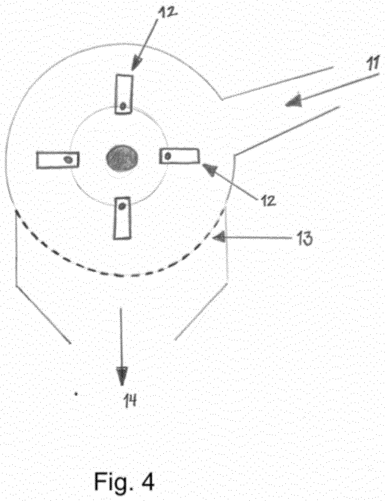

Fig. 4 is a drawing of a hammermill. Cellulose fiber material (11) from for example reed, Hibiscus Sabdariffa, enters a hammermill, the rotating wheel of this having four arms (12), hammers, tearing the cellulose fiber material to smaller pieces. A riddle (13) in the bottom has well-defined openings and only fiber granules shorter than the opening size pass.

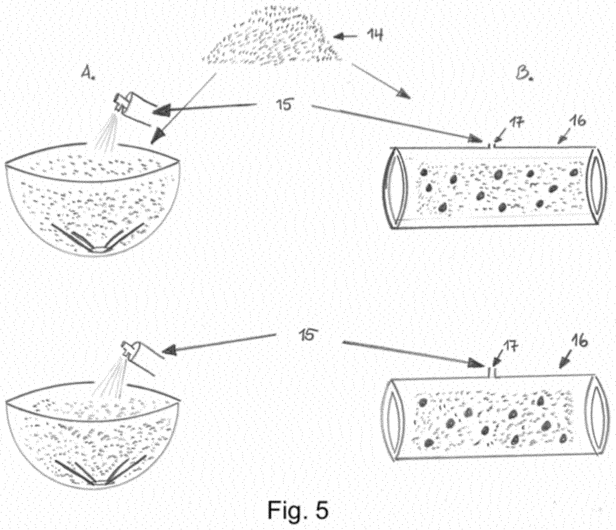

The cellulose fiber material from for example reed are treated at the same time in a hammermill to cellulose fiber granules of for example 3mm. Det surface is treated followingly, see the description of Fig. 5 with a solution in ethyl acetate also named ethyl ethanoate of:
Chicle gum 5g/l to 50g/l preferably 30g/l
benzaldehyde and/or benzyl alcohol 0,00025M - 0,001M
stearic acid 5g/l
salicylic acid 10g/l
if necessary, beta caroten 5g/l
if pH must be adjusted for example to pH 3,5, in that case with inorganic acid, preferably sulphuric acid.
The process is named enrichment method 2.

Ethan acid anhydride and ethanoic acid are not dissolved in ethyl acetate, when at the same time Chicle gum is added, as the polarity properties of solvated Chicle gum yields precipitation. Ethan acid anhydride and ethanoic acid are added after about 10-20 may be 60 min, when Chicle gum has been dissolved in ethyl acetate and Chicle gum has reacted with the cellulose fiber granules.

Disinfection and enrichment must for some growth media such as soil conditioners for plants and for litter for chickens be followed by a pH-stabilizing treatment see the description of Fig. 5.

Fig. 5 shows cellulose fiber granules at the top. An enrichment of cellulose fiber-granules may take place in two ways:
A: by spraying the ethyl ethanoate-solution described in Fig. 4 above from a spraying bottle (15) onto the cellulose fiber granules (14), or
B: by mixing the solution with cellulose fiber granules as here for example in a ball mill (16) with metal balls in the inner kernel, which turns around inside in a cylinder, which has a filling nozzle (17). The ethyl ethanoate-solution is filled-in via the filling nozzle (17).

If the cellulose fiber granules are used for litter for chickens, the enriched cellulose fiber granules must have an extra good disinfection to keep a sterile environment and at buffer system, which can handle the strong caustic environments from chickens. Without a buffer system the pH in litter will typically start at 5,5, when the litter is totally fresh and end at pH 8,5-9, when the chickens are ready for slaughtering. pH above 8 in litter is strongly inhibiting to growth of chickens.

Thus, cellulose fiber granules for litter for chickens are added in a next step to a solution of ethan acid anhydride and ethanoic acid in one of the two ways, A and B.

The solution comprises
ethan acid anhydride 50ml to 1500 ml / m³ preferably 200 ml/m³
ethanoic acid 50ml to 1500 ml / m³, preferably 200 ml/m³

- the cellulose fiber granules are stirred
- hereafter the treated cellulose fiber granules are added sulphuric acid or another inorganic acid to acid soil plants or litter for chickens to pH 4-5,5. If the product is used for litter for chickens, the purpose is an extra effort against growth of microorganisms. The lower the pH is the better the antimicrobial activity.

The benzaldehyde is oxidized gradually to benzoic acid, which is a preservative against mushrooms and bacteria. The purpose is to control the microorganisms to not decompose the cellulose fibers.

Ethyl acetate is the solvent for the compounds above and creates a buffer system, as ethyl acetate is hydrolyzed/oxidized over time to the system ethanoic acid-ethanoat, which enters the natural buffer system in the final product. pKs for ethanoic acid is 4,76 at 25 degrees Celsius. Ethanoic acid-ethanoat gives together with Hibiscus acid, citric acids, acidic phenols and salicylic acid pH-properties, which may be compared with buffer properties of Sphagnum from raised bog.

Salicylic acid is widespread in the nature and is a plant growth hormone, which is assimilated through the roots of the plants. Salicylic acid inhibits microorganisms and is soluble in benzaldehyde and ethyl acetate. Salicylic acid is embedded at low pH 1 to 3,5 in microcrystalline cellulose, MCC, and will be deliberated from here over time.

Acid hydrolysis of cellulose with sulphuric acid or ethanoic acid in both Hibiscus Sabdariffa and reed converts a part pf the amorph cellulose to microcrystalline cellulose, MCC, which have several good properties.

Salicylic acid is embedded in Hibiscus Sabdariffa fiber during enrichment method 1 in MCC at low pH in a water bath, and salicylic acid is embedded in reed fiber and Hibiscus Sabdariffa fiber in enrichment method 2 during the addition of ethan acid anhydride, ethanoic acid and if necessary an inorganic acid.

Acid hydrolysis gives a darker color of the fibers and the cellulose better water controlling properties, as it gives the cellulose a much larger surface and thus better embedding of salicylic acid. Growth media for plants and litter for chickens require pH 4-5,5.

Ethan acid anhydride inhibits the oxidation of alcohol and thus a reduction of the hydrolysis velocity of ethyl acetate, which gives a longer efficiency for the inhibition of microorganisms.

Ethan acid anhydride is converted, when there is water present by hydrolysis to ethanoic acid.

Ethanoic acid assists low pH.

Stearic acid may help the embedding of the non-polar salicylic acid in cellulose.

Benzaldehyde/benzyl alcohol and ethyl acetate dissolves Chicle gum, which together with salicylic acid and stearin acid sticks to the short and long fibers in the cellulosic fiber material.

Chicle is plant saft from the plant the genus Manikara or Sapodilla. Manikara/Sapodilla growing in Middle America/ Mexico and Thailand/Asia.

The plant sap Chicle is harvested in a total ordinary way every 5-7 year from the individual tree. The plant sap is boiled and stiffens to a solid mass. The solid mass is frizzed to -15 degrees- this is teared to fine granules with a large surface and is dissolved in ethyl acetate / benzaldehyde / benzyl alcohol.

Chicle gum has as opposed to Latex rubber trans-double bounds, which renders it difficult for Chicle to polymerize. Thus, Chicle gum is applied in the present invention in the disclosed amounts, which is required for upscaled production. Other compounds with the same reactants with the same gluing and polymerizing properties are also suitable.

The preserved properties from benzoic acid and salicylic acid are used in the growth medium according to the invention for a controlled conversion of those in fiber materials contained cellulose from respectively Hibiscus Sabdariffa, reed and cardboard.

Nutrients and cellulose which are naturally present in reed and Hibiscus Sabdariffa, which has been preserved, will in this way be used as plant fertilization and therefore give the plants a growth boost.

Cardboard i 3-5 mm is a cheap cellulose product, which is used as filler and as water absorbing material in the growth medium according to the invention. The organic resources are down chopped into a size of 2-10 mm and the mixing ratio is adjusted to the purpose of the final product.

Hammermill: The machine down chops the plant materials reed, Hibiscus and cardboard in selected sizes from 2 to 10 mm.

Plate mill: The machine performs a mechanical mixing of down chopped fiber material from reed and from HS, HS1 and HS2-fractions, followingly or at the same time with the down chopping treated with enrichment method 2. It is important that all material gets in contact with the liquid in enrichment method 2.

Mixing of cellulose fractions which are treated after enrichment method 1 and/or 2 and mixed, may also take place in a mixer for mixing of different resources:

A mixer for mixing of different resources performs a mechanical mixing of the different resources after the same method as in a feed wagon in the agricultural sector. A feed wagon comprises one or more worms vertical or horizontal, which force a mixture of for example ensilage, rapeseed cake, corn and peas. A feed wagon must deliver a uniform product to perhaps 200 cows - thus the mixing principle is of high quality in a feed wagon.

All drying processes of Hibiscus Sabdariffa is performed in the production country, today Thailand.

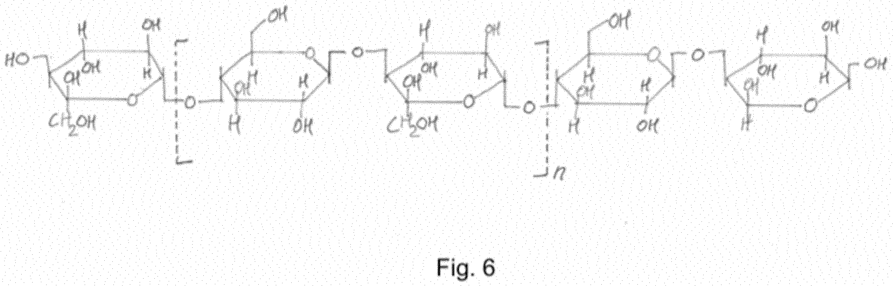

Fig 6 shows the units in a cellulose strand of β-D-glucose units in a fiber strand 300-25000. In Hibiscus Sabdariffa 70% of the fibers are crystalline structured and 30 % amorph.

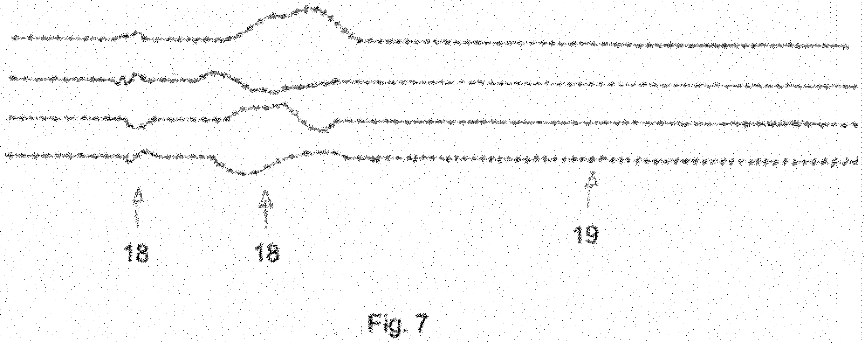

Fig. 7 shows the cellulose fibers lengths of covalent bounded β-D-glucose-units with regions of amorph (18) respectively crystalline (19) cellulose.

### Example 1

The growth medium as soil conditioner comprises the cellulose fiber granules after fractionation of down chopped Hibiscus Sabdariffa straws, HS2, followingly down chopped to 5 mm, the cellulose fiber fraction after fractionation disinfection and enriched of Hibiscus Sabdariffa straws, HS1, followingly down chopped to 3 mm and down chopped straws from reed 2 and/or 5 mm in the weight ratio:
Down chopped straws from reed 0-40weight% preferably 30-50 weight%.
HS1 down chopped to 3 mm preferably 5-30 weight%
HS2 down chopped to 5 mm preferably 5-40 weight%
HS1 and HS2 down chopped preferably 10-70weight%
Cardboard down chopped to 3 mm 0-20 weight%
Sand 0-20 weight%

### Example 2

The growth medium for litter for example chickens comprises cellulose fiber granules after fractionation disinfected and enriched of Hibiscus Sabdariffa straws, HS1, followingly down chopped to 3 mm, or Hibiscus Sabdariffa straws, HS, followingly down chopped to 3 mm, the cellulose fiber granules after fractionation and treatment of straws from reed down chopped to 3 mm and/or 5 mm, and down chopped cardboard and if necessary sand in the weight ratio:
Down chopped straws from reed 30-50 weight%
Down chopped HS1 10-40 weight%
Down chopped HS2 5-30 weight%
Minimum HS1 and HS2 together 15 weight%.

### Example 3

The growth medium as ground cover comprises at least one cellulose fiber granules after fractionation of Hibiscus Sabdariffa straws, HS, followingly down chopped to 3 to 5 mm, the cellulose fiber fractionation of straws from reed down chopped to 3 to 7 mm, and down chopped cardboard and sand in the weight ratio:
Down chopped straws from reed 0-60weight%
HS 15-30weight%
Down chopped cardboard 0-30weight%
Sand 0-30weight%

Hibiscus Sabdariffa is today cultivated in Thailand in preparation to harvest of the flowers and the leaves. The plant residues/the straws, after that the flowers are harvested, is a material which is used as resource to det porous strong cellulosic material in the growth medium according to the invention. Down chopped straws of both Hibiscus Sabdariffa and reed may be produced in different sizes typically 3 mm and 5 mm depending on the application area of a growth medium.

Cellulose fiber for a growth medium according to the invention may be prepared from in addition to Hibiscus Sabdariffa from the rest crop, reed, from the agricultural sector. Reed is harvested in preparation to roof covering of typical houses with half-timbering. A large part of the harvest is not useful for this purpose. Danish producers of reed may deliver the rest crop in appropriate amounts for production of the growth medium. Cardboard may also make up a part of the growth medium. If appropriate it may be clean return cardboard.

### Characteristics by growth media according to the invention

### 1. Growth media as litter for chickens

This growth medium contains enriched hydrolyzed and down chopped fiber from Hibiscus Sabdariffa, HS1 and HS2 or other cellulose fiber with a content of plant polyphenols including phenolic acids and enriched hydrolyzed and down chopped fiber from reed.

The functions are:
1. to assimilate liquid fast and deliberate liquid fast such that the chickens walk on dry underlay, which acid treated fiber from reed are optimized for.
2. to provide an airy growth medium, which assists in the well-being of the feet of chickens - originates from HS2 and HS1.
3. to neutralize the caustic excrements of the chickens, pH 8-9, with an effective buffer system - which originates from the combination of enriched HS1, HS2 and reed fiber, where these are the cellulose material.

### 2. Growth media for acid soil plants

Comprise the same cellulose fiber granules-mixture as litter, that is a little larger content of reed fibers, such that larger water binding capacity and a larger content of HS1 fiber are obtained - the buffer capacity is smaller for growth media for acid soil plants than for litter for chickens. The content of the enriched cellulose fibers of salicylic acid gives the plant a growth boost, and the composition of salicylic acid and benzaldehyde has an effect against the microbial degradation of the cellulose fibers. Hibiscus Sabdariffa or other plant-phenolic acid and/or plant polyphenol enriched fibers have even a good effect against microorganism's conversion of the cellulose.

### 3. The growth medium as ground cover

It comprises down chopped reed, enriched or not enriched, down chopped Hibiscus Sabdariffa, which is very suitable as ground cover on for example paths in church yards, enriched or not enriched, down chopped cardboard enriched or not enriched, and sand.

Down chopped Hibiscus Sabdariffa gives a soft underlay, cardboard gives fill and sand gives water penetration possibility.

Any cellulosic material comprising *β*-D-glucose covalently bounded with mainly beta-1,4-bounds is suitable for composition of a growth medium, provided the density is light enough that is up to 250 kg/m³. The substances for antimicrobial growth may be added, and pH is adjusted with a simple inorganic acid.

The three growth media above give a climate gain by replacement of Spaghnum as growth medium and as replacement for bark as ground cover.

Hibiscus Sabdariffa and hemp are among known plants those which have the largest content of cellulose in the fiber part - Hibiscus Sabdariffa and Hemp have a cellulose-content around 70 % of the fiber material.

Hibiscus Sabdariffa has even a fraction of crystalline cellulose up to 80 %, one of the highest fractions in plants. Crystalline cellulose is better at embedding salicylic acid and has a tensile strength corresponding to other packing.

In addition Hibiscus Sabdariffa has a high antimicrobial defense system consisting of phenol acids for example 3,4 dihydroxybenzoic acid, polyphenols inclusive flavonoids and anthocyanins and organic acids such as citric acid and hibiscus acid.

The properties above make Hibiscus Sabdariffa to the most important part of the resource for growth media according to the invention.

Enrichment method 1 is extremely important to treatment of Hibiscus Sabdariffa, as the growth medium must contain sufficient with antimicrobial activity.

Enrichment method 2 is achieved by the mixing of the treated reed granules and by addition of ethan acid anhydride and ethanoic acid. Enrichment method 2 is also a further supplement to the natural polyphenols and phenol acids in Hibiscus Sabdariffa.

A useful cellulose fiber material where Hibiscus Sabdariffa is one of these may be divided in two groups which are:
Cellulose fiber from
   1. plants which naturally contains phenol acids, polyphenols and organic acids and
   2. cellulose fiber which are added plant phenol acids and/or plant polyphenols and/or organic acids
Reed (Common Reeds)

Reed grows in wetlands with large bird activity. In these areas with large humidity there is a large growth of fungous spores and bacteria for example salmonella. Thus, reed are infected with microbial activity, and they must be treated, before they can be used under controlled conditions such as litter for chickens.

Reed cellulose fiber contains 35-40 % cellulose, 25% lignin and 20% hemicellulose. Lignin and not least hemicellulose provide a breeding ground for microorganisms.

The cellulose in reed makes up 40 % and has a crystallinie index of 65%, that is a relatively large amorph part of long fibers.

Both Hibiscus Sabdariffa and Reed er rest products from other production and is, thus, interesting as a resource. Reed may be exchanged with several other cellulose fiber plants if necessary.

A growth medium according to this invention is, where the growth medium comprises one or more cellulose fractions after disinfection and enrichment of at least one plant material and subsequently down chopping from a plant with longer fibers with a cellulose-content of minimum 30weight% with a crystallinity index of above 54%, if appropriate straws from reed and at least one with a cellulose-content of minimum 50weight% with a content of crystalline cellulose of above 54%, for example Hibiscus Sabdariffa.

A growth medium will also be one which further comprises down chopped cardboard.

Examples on growth media which have been as soil conditioner for plants, are

| | |
|---|---|
| -a mixture of down chopped cellulose fiber granules, which comprises | |
| -the cellulose fiber granules after fractionation of down chopped reed prepared enriched after method 2 | 0-40weight% |
| the cellulose fiber granules after fractionation of straws of Hibiscus Sabdariffa, HS1, prepared according to the invention down chopped and enriched after method 1 | 5-60 weight% preferably 25-60weight% |
| cellulose fiber fraction after fractionation of soaked straws of Hibiscus Sabdariffa, HS2, and enriched after method 1 | 5-60weight% preferably 25-60weight% |
| where HS1 and HS2 together make up | 10-100weight% preferably 50-100weight% |
| down chopped cardboard | 0-20weight% preferably 0-10weight% |
| sand | 0-20weight% |

There has been performed several trials, and only the intervals which are preferable are suitable to satisfactory growth of plants.

Growth media according to the invention may also be used as litter for chickens. There has been performed several trials, and only the intervals which are preferable are suitable to satisfactory function as litter.

The growth media are a mixture of:

| | |
|---|---|
| cellulose fiber fraction after fractionation of straw from reed, down chopped, disinfected and enriched according to method 2 | 0-60weight% preferably 0-30weight% |
| cellulose fiber fraction after fractionation in decorticator of straws of Hibiscus Sabdariffa, HS1, and disinfection and enrichment to method 1 separation method 1 and down chopped to small balls á diameter 5 to 30 mm | 5-60 weight% preferably 25-60weight% |
| cellulose fiber fraction after fractionation of soaked Hibiscus Sabdariffa straws, HS2, separated and enrichment of fiber fraction according to method 1 separation method 2 down chopped and made into small balls á diameter 5 to 30 mm | 5-60 weight% preferably 25-60weight% |
| HS1 and HS2 together | 10-100weight% preferably 50-100weight% |

A growth medium according to the invention as ground cover may be prepared from an amount of cardboard or sand. It should preferably be added some Hibiscus Sabdariffa. The preferred amounts are the most qualified.

The growth medium consists then of a mixture of:

| | |
|---|---|
| down chopped, disinfected and enriched reed straws, for example 5mm prepared according to method | 20-100 weight% preferably 0-60weight% |
| Down chopped straws from Hibiscus Sabdariffa, according to method | 0,5-30weight% preferably 0,5-25weight% |
| Down chopped cardboard for example 5 mm | 0-50weight% |
| Sand | 0-30weight% |

### Reference number list

1. Cross-section through Hibiscus Sabdariffa straw
2. Decorticator
3. Roller with ribbed surface
4. Driving wheel
5. Broad distribution wheel
6. Pith material from straw
7. Pond or lake
8. Bath
9. Hibiscus Sabdariffa fiber
10. Bundles of Hibiscus Sabdariffa fiber
11. Cellulose fiber fraction
12. Arm, hammer
13.Riddle
14. Cellulose fiber granules
15. Spraying bottle
16. Ball mill
17. Filling-in nozzle
18. Region with amorph cellulose
19. Region with crystalline cellulose

## Claims

1. A method for disinfection and enrichment of a cellulose fiber fraction of cellulosic material **characterized by** that said cellulosic material has a cellulose-content of minimum 30weight%, preferably 50weight% and a crystallinity index above 30%, preferably 30%-54%, where the cellulosic material is treated with a solution of benzaldehyde or benzyl alcohol, salicylic acid and Chicle gum in ethyl ethanoate or ethanoate derivate with properties as of ethyl ethanoate.

2. A method according to claim 1, where said solution comprises the following in ethyl ethanoate or with properties as of ethyl ethanoate, the concentrations are final concentrations in the final solution without cellulosic material:
a) benzaldehyde and/or benzyl alcohol 0,00025M - 0,001M,
b) salicylic acid 10-50 g/l solution and
c) Chicle gum 0-100 g/l, preferably 5 g/l to 50 g/l, most preferably 30g/l, and
- pH is adjusted preferably to 1 to 4,
- the solution is sprayed onto or mixed with cellulose fiber granules from reed, down chopped reed or other cellulosic fiber material for example from Hibiscus Sabdariffa,
- after a reaction time typically of between 25 min and 60 min between the cellulosic filter material and the solution there is added if appropriate:
d) ethan acid anhydride to a concentration of 0,1M to 2,0 M
e) ethanoic acid to a concentration of 0,1 M to 3,6 M
f) stearic acid 5g/l
g) betacaroten 5g/l preferably as antioxidant
h) inorganic acid preferably sulphuric acid to pH 4-5,5, to acid soil plants to pH 4,5.

3. A method for disinfection and enrichment according to claim 1 or 2 comprising the following steps,
- provide the cellulosic material for example reed straws
- down chop the cellulosic material, if reed straws in for example a hammermill with an riddle into particles of a selected size from 2 to 10 mm preferably at least one fraction, if reed straws to for example 2 mm or to for example 5 mm,
- mix said at least one fraction of down chopped cellulosic material for example down chopped reed straws in for example a plate mill, a ball mill or a rotor mill and treat the mixture as disclosed in claim 1 or 2, ensuring contact between all liquid and down chopped cellulosic material for example down chopped reed straws,
- isolate the cellulosic down chopped enriched fiber fraction.

4. A method for disinfection and enrichment of a cellulose fiber fraction of cellulosic plant material **characterized by that** said cellulosic plant material has a cellulose-content of minimum 30weight%, preferably minimum 50weight%, and a content of crystalline structured cellulose above 30%, preferably above 54%, for example as in Hibiscus Sabdariffa
where the cellulosic plant material at room temperature is treated for 1 to 5 hours with a solution in ethyl ethanoate or ethanoate derivates with properties as ethyl ethanoate of benzaldehyde or benzyl alcohol, and salicylic acid which solution is adjusted to pH between 2 and 6,5, preferably neutralization is done with kalium hydroxide.

5. A method according to claim 4 where said solution comprises:
- benzaldehyde for example 0,9 -1,0 M or benzyl alcohol to a final concentration of 0,00025M - 0,001M
- salicylic acid 10-50 g/l, preferably 20g-35g/l, most preferably 30g/l
- concentrated sulphuric acid added to a pH between 2 and 6,5, preferably between 3,5 and 6,5, and final concentration 0,001M - 0,00001M, where said method comprises the following steps:
- let the solution stand at room temperature for 1 to 5 hours
- isolate the clean cellulose fiber fraction from den aqueous solution
- perform a drying and if appropriate a bundling of the cellulose fiber fraction.

6. A method according to claim 4 or 5 comprising:
- perform two of the following steps (1a-1b, 2)
1a- isolate said clean cellulose fiber fraction from the aqueous solution according to claim 4 - perform a drying or
1b- provide said solution according to claim 5 - perform a drying
2 -a concentrated acid for example sulphuric acid is added to pH 1,5 to 3, optimally 2, to said dried cellulose fiber fraction in step 1
- the cellulose fiber fraction is evaporated for the water for example by aid of the sun - at pH below 2 the cellulose fiber fraction is moistened
- hereafter pH is fine adjusted with for example a solution of kalium hydroxide to 3,5.

7. A method according to any of the claims 1 to 6, where said cellulose fiber the fraction is from a cellulosic plant material containing fiber with a length of 1 cm to 200 cm long with minimum 30weight%, preferably minimum 50weight% cellulose, of which above at least 30%, preferably, in claim 1, 2 or 3, 30 to 54%, and in claim 4, 5 or 6 above 54%, is structured crystalline.

8. A method according to claim 6 comprising the following steps:
- provide straws from a cellulosic plant material
- perform one of the following two steps (1, 2a-2c):
1) separate the straws in a decorticator in a cellulose fiber fraction (HS1) and pith material (6) or
2a) lay the straws in an artificial lake of typically 25mx80m and 5 m deep containing water
2b) -let the straws lye soaked for 2 - 4 weeks at room temperature
2c) -the straws are taken up and separated using a decorticator or manually in a cellulose fiber fraction (HS 2) and pith material (6)
3) -hereafter the cellulose fiber fraction is disinfected and enriched as disclosed in claim 6.

9. A method for down chopping of a cellulose fiber fraction one or more together according to claim 8
- provide one or more cellulose fiber fractions provided according to claim 8
- down chop it or them in a hammermill to cellulose fiber granules with a particle size of 2 to 10 mm, if appropriate form these to small balls with diameters á 5 to 30 mm
- if appropriate perform step 2 according to claim 7.

10. A method for down chopping, disinfection and enrichment of cardboard comprising the following steps:
- down chop said cardboard in a hammermill to a particle size from 3 to 7 mm preferably at least one fraction of down chopped cardboard á 5 mm
- said down chopped cardboard are treated in a solution with benzaldehyde and/or benzyl alcohol, salicylic acid, chicle gum in solvent ethyl ethanoate as disclosed in claim 1, typically for 0-60 minutes,
- isolate the cellulosic down chopped disinfected, enriched cellulose fiber fraction.

11. A growth medium **characterized by that** the growth medium compressed at 1 atm. pressure has a max water content of 5 weight% and a density of max 250 kg/m³ and comprises at least one or more isolated cellulose fiber fractions or cellulose fiber granules provided according to any of the claims 3, 8, 9 or 10, at least one with a crystallinity index of above 54% from for example Hibiscus Sabdariffa.

12. A growth medium **characterized by that** the growth medium comprises one or more cellulose fiber fractions provided according to any of the claims 1 to 3 from at least one down chopped plant material with a crystallinity index of above 54%, if appropriate straws from reed, and at least one with a cellulose-content of minimum 50weight%, for example Hibiscus Sabdariffa and if appropriate further down chopped cardboard.

13. A growth medium as soil conditioner for plants, **characterized by that** it comprises
- a mixture of down chopped cellulose fiber granules according to claim 3, 8, 9 or 10:
| | |
|---|---|
| the cellulose fiber granules after fractionation of down chopped reed enriched according to method 2 according to any of the claims 1 to 3 | 0-40weight% |
| the cellulose fiber granules after fractionation of straws of Hibiscus Sabdariffa, HS1, prepared according to the invention down chopped and enriched according to methode1 according to any of the claims 4 to 6 | 25-60weight% |
| cellulose fiber fraction after fractionation of soaked straws of Hibiscus Sabdariffa, HS2, and enriched accordingto method 1 according to any of the claims 4 to 6 | 26-60 weight% |
| HS1 and HS2 together making up | 50-100weight% |
| down chopped cardboard | 0-10 weight% |
| sand | 0-20 weight% |

14. A growth medium **characterized by** said medium may be used as litter for chickens:
a mixture of cellulose fiber fractions or cellulose fiber granules according to claim 1, 2 ,3, 8, 9 or 10:
| | |
|---|---|
| the cellulose fiber fraction after fractionation of straws from reed, down chopped, disinfected and enriched according to method 2 according to any of the claims 1 to 3 | 0-30 weight % |
| the cellulose fiber fraction after fractionation in decorticator of straws of Hibiscus Sabdariffa, HS1, and disinfection and enrichment according to method 1 according to any of the claims 4 to 6 separation method 1 and down chopped to small balls according to claim 11 á diameter 5 to 30 mm | 25-60 weight% |
| cellulose fiber fraction after fractionation of soaked Hibiscus Sabdariffa straws, HS2, separated and enrichment of fiber fraction according to method 1 according to any of the claims 4 to 6 separation method 2 down chopped and formed to small balls according to claim 11 á diameter 5 to 30 mm | 25-60weight% |
| HS1 and HS2 together | 50-100weight% |

15. A growth medium **characterized by that** said medium may be used as ground cover and comprises a mixture of down chopped cellulose fiber fractions or cellulose fiber granules according to claim 1, 2, 3, 8, 9 or 10:
| | |
|---|---|
| - a mixture of down chopped, disinfected and enriched reed straws, for example 5mm prepared according to method 2 according to any of the claims 1 to 3 | 0-60 weight% |
| down chopped straws from Hibiscus Sabdariffa, according to method 1 according to any of the claims 4 to 6 | 0,5-25weight% |
| down chopped cardboard for example 5 mm | 0-50weight% |
| sand | 0-30 weight% |
